# EUROPÄISCHE PATENTSCHRIFT

(11) **EP 1 046 171 B1**
(45) Veröffentlichungstag und Bekanntmachung des Hinweises auf die Patenterteilung: **12.06.2002**
(21) Anmeldenummer: 99903601.5
(22) Anmeldetag: 05.01.1999
(51) Int. Cl.: G11B 33/04

(54) **HALTERUNG FÜR MINDESTENS EINE COMPACT DISK**
HOLDING DEVICE FOR AT LEAST ONE COMPACT DISC
SUPPORT POUR AU MOINS UN DISQUE COMPACT

(30) Priorität: 08.01.1998 DE 29800183 U
(43) Veröffentlichungstag der Anmeldung: 25.10.2000
(73) Patentinhaber: Lethen, Philip, 47798 Krefeld (DE); Jansen, Markus Maria, 47805 Krefeld (DE)
(72) Erfinder: Lethen, Philip, 47798 Krefeld (DE); Jansen, Markus Maria, 47805 Krefeld (DE)
(74) Vertreter: Schüll, Gottfried, Dipl.-Phys.
(86) Internationale Anmeldenummer: EP9900009
(87) Internationale Veröffentlichungsnummer: WO9935648

(56) Entgegenhaltungen:
- DE-U- 9 407 655
- DE-U- 29 605 573
- US-A- 5 188 229
- US-A- 5 697 496

## Beschreibung

Die vorliegende Erfindung betrifft eine Halterung für mindestens eine Compact Disk, CD, die eine Umhüllung mit einer Vorderseite und einer Rückseite aus einem Pappmaterial aufweist. Auf mindestens einer der Innenflächen der Umhüllung sind Befestigungsmittel vorgesehen, mit denen die Compact Disk in der Halterung befestigt wird. Somit ist ein Transport und eine Lagerung ohne mögliche Beschädigungen der empfindlichen, die Informationen tragenden Oberfläche der Compact Disk möglich. Die hauptsächliche Verwendung von Compact Disks besteht in der Anwendung als Musik-CD, während weiterhin eine Compact Disk auch als Informationsträger wie beispielsweise als CD-ROM verwendet wird.

Im Stand der Technik ist eine Vielzahl von Formen von Halterungen für eine Compact Disk bekannt, wobei verschiedene Materialien verwendet werden. Hauptsächlich wird jedoch eine durchsichtige Kunststoffumhüllung verwendet, wobei das Befestigungsmittel aus einem im wesentlichen kreisförmigen Element mit einer Mehrzahl von Lamellen besteht, auf denen die in jeder Compact Disk zentral angeordnete Öffnung aufgesetzt und eingerastet werden kann. Dabei geben die einzelnen Lamellen während des Aufsetzens nach, so daß sich der äußere Durchmesser der hochstehenden Lamellenenden verringert und die Compact Disk einrasten kann. Zum Entfernen der Compact-Disk von dieser Art Halterung werden die Lamellen heruntergedrückt, so daß sich die Compact Disk von dem Befestigungsmittel löst.

Diese Art des Befestigungsmittels, das ausschließlich aus einem Kunststoff hergestellt ist, hat eine starke Verbreitung gefunden. Daher weisen nahezu sämtliche Halterungen für eine Compact Disk ein derartiges aus Lamellen bestehendes Befestigungsmittel auf.

Dieses aus Kunststoff bestehende Befestigungsmittel wird auch bei Halterungen für eine Compact Disk verwendet, deren Umhüllung aus einem anderen Material als Kunststoff besteht. So sind beispielsweise auch Halterungen bekannt, deren Umhüllung aus einem Pappmaterial oder aus Metall besteht. Zur Befestigung der Compact Disk ist jedoch jeweils das zuvor beschriebene, Lamellen aufweisende und aus Kunststoff bestehende Befestigungsmittel vorgesehen, das in geeigneter Weise an einer der Innenflächen der Umhüllung befestigt, vorzugsweise festgeklebt ist. So ist aus US 5 188 229 eine Halterung für eine Compact Disk bekannt, deren Umhüllung aus einer Vorderseite und einer Rückseite aus einem Pappmaterial besteht und dessen auf der Innenfläche der Rückseite der Umhüllung angeordnetes Befestigungsmittel aus Plastik besteht. Das Befestigungsmittel wird aus einzelnen, zuvor näher beschriebenen Lamellen gebildet.

Darüber hinaus sind Halterungen für eine Compact Disk bekannt, bei denen die Umhüllung Einsteckhüllen aufweist, in die von einer Seite die Compact Disk eingeschoben wird und die daraufhin nahezu vollständig vom Material der Umhüllung umgeben ist.

Eine weitere vollständig aus Pappmaterial bestehende Halterung für eine Compact Disk ist aus DE 94 07 655 U1 bekannt, bei der die Compact Disk in einen runden, dem Auβenumfang der Compact Disk entsprechenden Ausschnitt einer auf eine geschlossene untere Kartonlage aufgeklebten oberen Kartonlage eingelegt wird und dort durch einen an den Kartonlagen angelenkten Klappdeckel gehalten wird, der den Ausschnitt zur Aufnahme der Compact Disc abdeckt. Zur verbesserten Halterung der Compact Disc wird zwischen den Kartonlagen eine weitere, ebenfalls mit einem Ausschnitt versehene Kartonlage vorgesehen, die - ebenso wie die obere Kartonlage - mit in die Ausschnittfläche hineinragenden Noppen versehen ist. Diese Noppen werden durch die Compact Disk eingedrückt und halten diese in dem Ausschnitt.

Die zuvor beschriebenen aus dem Stand der Technik bekannten Halterungen für eine Compact Disc weisen verschiedene Nachteile auf.

So ist von einem Teil der Verbraucher die Verwendung von Kunststoff aus Gründen des Umweltschutzes wie auch aus ästhetischen Gründen nicht erwünscht.

Weiterhin weist eine vollständig aus einem Kunststoff bestehende Halterung für eine Compact Disk den Nachteil auf, daß für eine Informationsvermittlung des Inhaltes zusätzlich ein in der Regel aus einem Papier bestehender Einschub oder ein entsprechender Aufkleber auf der Innenseite der Umhüllung erforderlich ist. Denn ein direktes Bedrucken des Kunststoffmaterials der Umhüllung ist aufwendig und kostspielig.

Diesem Mangel wird im Stand der Technik teilweise dadurch begegnet, daß die Halterung für eine Compact Disk eine aus einem Pappmaterial bestehende Umhüllung aufweist, die an sich bedruckt werden kann. Jedoch wird bei einer derartigen Halterung das eigentliche Ziel der Befestigung der Compact Disk nur durch die Verwendung eines aus einem Kunststoff bestehenden Haltemittels erreicht. Dadurch werden umweltbewußte Benutzer nur zu einem Teil befriedigt.

Eine vollständig aus einem Pappmaterial bestehende Verpackung hingegen weist zur Befestigung der Compact Disk lediglich Einschubhüllen auf, die die Compact Disk weitgehend umgeben, so daß ein Befestigen und Loslösen der Compact Disk schwierig und aufwendig ist. Dabei leidet nicht zuletzt auch die empfindliche Oberfläche der Compact Disk, während diese in die Umhüllung eingeschoben wird. Weiterhin ist bei der letztgenannten Halterung die Oberfläche der Compact Disk nur zum Teil zu erkennen, die neben der Halterung an sich auch für eine Informationsvermittlung bezüglich des Inhaltes der Compact Disk verwendet wird.

Der Erfindung liegt daher das technische Problem zugrunde, eine Halterung für mindestens eine Compact Disk anzugeben, die vollständig aus einem umweltfreundlichen Material besteht und gleichzeitig eine sichere und einfach zu handhabende Befestigung der Compact Disk ermöglicht.

Das zuvor aufgezeigte technische Problem wird erfindungsgemäß durch eine Halterung für mindestens eine Compact Disk mit den Merkmalen des Anspruches 1 gelöst. Erfindungsgemäß ist erkannt worden, daß die Elastizitätseigenschaften des Pappmaterials für eine sichere Befestigung der Compact Disk in der erfindungsgemäßen Halterung genutzt werden können. Weiterhin liegt der Erfindung die Erkenntnis zugrunde, daß die Abmessungen der Compact Disk normiert sind, so daß der Innendurchmesser der zentral angeordneten Öffnung sowie der Außendurchmesser der Compact Disk aufgrund einer entsprechenden Normung vorgegeben sind. Da sich darüber hinaus das Pappmaterial durch entsprechend voreingestellte Stanzvorrichtungen sehr genau bearbeiten läßt, können erfindungsgemäß Befestigungsmittel hergestellt werden, die an den inneren Durchmesser der Compact Disk angepaßt sind.

Gemäß der in Anspruch 1 beschriebenen Halterung für mindestens eine Compact Disk ist auf einer der Innenflächen der Umhüllung mindestens ein Befestigungselement befestigt, wobei die Umhüllung und das Befestigungselement aus einem Pappmaterial bestehen. Das Befestigungselement ist im wesentlichen rund ausgebildet und weist einen Außendurchmesser auf, der an den Innendurchmesser der zentral angeordneten Öffnung der Compact Disk angepaßt ist. Somit ist ein Aufsetzen der Compact Disk auf dieses Befestigungselement möglich, wobei das Befestigungselement aufgrund der Elastizität des Pappmaterials geringfügig, insbesondere im Bereich des Außendurchmessers, nachgeben kann. Es ergibt sich ein fester Sitz der Compact Disk auf dem Befestigungselement. Diese wird also von dem Befestigungselement an der Innenfläche der Umhüllung festgehalten, wobei die Compact Disk nicht ohne äußere Einwirkung von dem Befestigungselement abrutschen kann.

Zum Entfernen der Compact Disk von dem Befestigungselement kann die entsprechende Innenfläche der Umhüllung nach hinten von der Compact Disk weggerichtet verbogen werden, so daß die Compact Disk an deren Rand von hinten gegriffen werden kann, um diese von dem Befestigungselement abzuziehen. Ebenso kann das in der Öffnung der Compact Disk vorhandene Befestigungselement aus dieser Öffnung herausgedrückt werden, ohne daß dabei die Compact Disk zu stark durchgebogen wird und somit Schaden erleidet. Denn aufgrund der Elastizitätseigenschaften des Pappmaterials gibt die Umhüllung und auch das Befestigungselement in genügender Weise dem ausgeübten Druck nach, so daß sich die Compact Disk von dem Befestigungselement und somit von der gesamten Halterung in sicherer Weise lösen läßt.

Bei einer weiteren bevorzugten Weiterbildung der Halterung für mindestens eine Compact Disk ist zusätzlich zum zuvor beschriebenen Befestigungselement an einer der Innenflächen der Umhüllung mindestens ein Befestigungsrahmen befestigt, wobei die Umhüllung und der Befestigungsrahmen aus einem Pappmaterial bestehen. Der Befestigungsrahmen weist eine im wesentlichen kreisförmige Öffnung auf, deren Innendurchmesser an den Außendurchmesser der Compact Disk angepaßt ist. Somit ist ein Eindrücken der gesamten Compact Disk in die durch den Befestigungrahmen vorgegebene kreisförmige Öffnung möglich. Auch hier dienen die Elastizitätseigenschaften des Pappmaterials dazu, daß der Befestigungsrahmen im Bereich der inneren Kante der Öffnung nachgibt und sich somit durch das Eindrücken der Compact Disk eine sichere Verbindung und Befestigung ergibt. Zum Entfernen der Compact Disk ist es dann ebenfalls aufgrund der Elastizitätseigenschaften des Pappmaterials möglich, die Innenfläche der Umhüllung zusammen mit einem Teil des Befestigungsrahmens von der Compact Disk weggerichtet nach hinten zu verbiegen. Die Compact Disk kann dann zumindest von einer Seite gegriffen werden, so daß ein Herausdrücken oder ziehen der Compact Disk aus dem Befestigungsrahmen möglich ist.

In weiter bevorzugter Weise ist an der Innenseite der Öffnung des Befestigungsrahmens mindestens eine radial nach außen gerichtete Ausnehmung vorgesehen, so daß beim Loslösen der Compact Disk aus dem Befestigungsrahmen ein leichteres Hintergreifen des Randes der Compact Disk mit einem Finger einer Hand möglich ist. Somit wird zusätzlich das Herausnehmen der Compact Disk vereinfacht.

Schließlich ist es in bevorzugter Weise möglich, sowohl auf der Innenfläche der Vorderseite als auch auf der Innenfläche der Rückseite oder einer weiteren Vorderseite eines der zuvor beschriebenen Befestigungsmittel anzuordnen. Somit wird dann eine Halterung für zwei Compact Disks gebildet.

Insgesamt ergibt sich bei den erfindungsgemäßen Halterungen für eine Compact Disk, daß neben des einheitlich verwendeten Pappmaterials und der damit verbundenen umweltfreundlichen Halterung auch eine ästetisch ansprechende Halterung hergestellt werden kann. Durch Auswahl verschiedener Pappsorten und -stärken läßt sich das äußere Erscheinungsbild ebenso wie durch eine geeignete Form des Bedruckens vorteilhaft beeinflussen.

Im folgenden wird anhand von Ausführungsbeispielen die Erfindung näher erläutert, wobei auf die Zeichnung Bezug genommen wird. In der Zeichnung zeigen:
- Fig. 1: ein erstes erfindungsgemäßes Ausführungsbeispiel einer Halterung für eine Compact Disk in einer perspektivischen Darstellung,
- Fig. 2: den Zuschnitt des Pappmaterials eines zweiten erfindungsgemäßen Ausführungsbeispieles einer Halterung für eine Compact Disk in einer Draufsicht,
- Fig. 3: den in Fig. 2 dargestellten Zuschnitt des Pappmaterials während der Herstellung der Halterung in einer perspektivischen Darstellung und
- Fig. 4-7: den Zuschnitt und das Zusammenfügen einer Halterung für zwei Compact Disks.

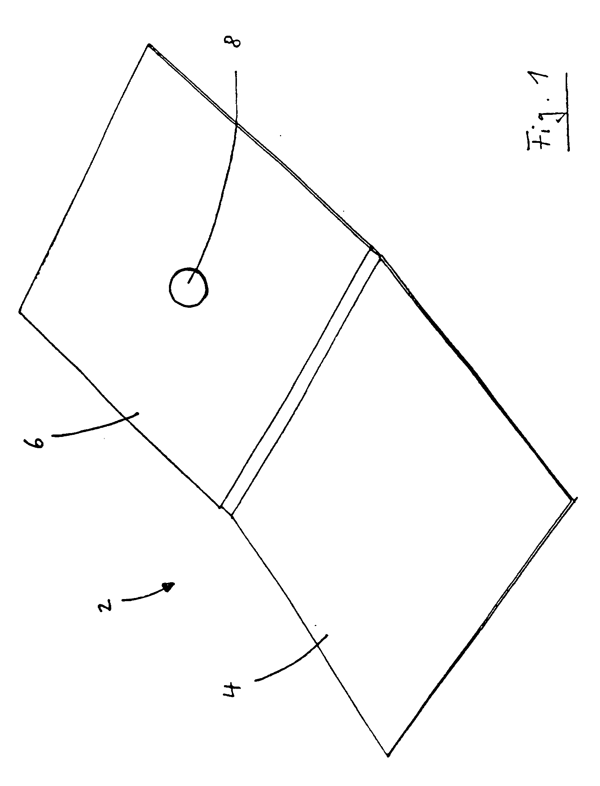

In Fig. 1 ist eine erfindungsgemäße Halterung für eine Compact Disk dargestellt, die eine Umhüllung 2 mit einer Vorderseite 4 und einer Rückseite 6 aufweist. Weiterhin ist auf einer der Innenflächen der Umhüllung 2, nämlich auf der Innenfläche der Rückseite 6, ein Befestigungselement 8 angeordnet. Dabei ist die Position des Befestigungselementes 8 bezogen auf die gesamte Innenfläche der Rückseite 6 im wesentlichen mittig angeordnet.

Das in Fig. 1 dargestellte Ausführungsbeispiel der erfindungsgemäßen Halterung ist vollständig aus einem Pappmaterial hergestellt, so daß sowohl die Umhüllung 2 als auch das Befestigungselement 8 aus dem Pappmaterial bestehen.

Das Befestigungselement 8 ist im wesentlichen rund ausgebildet, wobei der Außendurchmesser des Befestigungselementes 8 an den Innendurchmesser der zentral angeordneten Öffnung einer nicht dargestellten Compact Disk angepaßt ist. Durch ein Aufsetzen der Compact Disk auf das mittige Befestigungselement 8 wird eine zuverlässige Befestigung der Compact Disk an der Rückseite 6 der Umhüllung 2 erreicht, so daß sich insgesamt eine zuverlässige Halterung für eine Compact Disk ergibt.

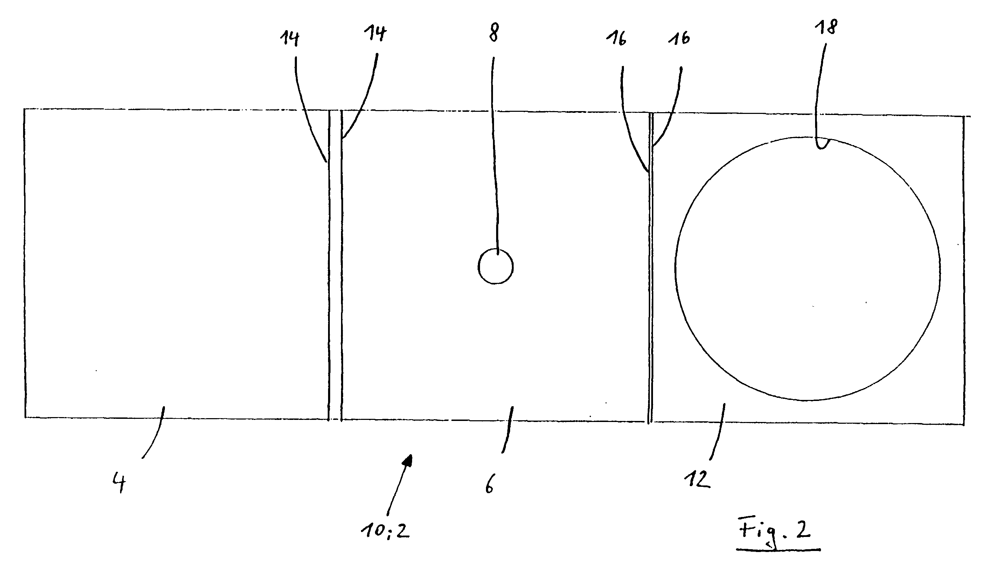

In Fig. 2 ist der aus einem Pappmaterial bestehende Zuschnitt 10 eines zweiten erfindungsgemäßen Ausführungsbeispiels dargestellt. Der Zuschnitt 10 weist insgesamt eine rechteckige langgestreckte Form auf und ist im wesentlichen in drei quadratische Abschnitte aufgeteilt, die im zusammengebauten Zustand die Vorderseite 4, die Rückseite 6 sowie einen Befestigungsrahmen 12 bilden. Zwischen den verschiedenen quadratischen Abschnitten sind Falzungen 14 und 16 vorgesehen, so daß bei einem Zusammenfalten des Zuschnittes 10 ein Umknicken an vorgegebenen Linien erfolgt. Dabei weisen die Falzungen 14 zwischen der Vorderseite 4 und der Rückseite 6 einen größeren Abstand voneinander auf, als es bei den Falzungen 16 zwischen der Rückseite 6 und dem Befestigungsrahmen 12 der Fall ist. Somit kann der Befestigungsrahmen 12 nach dem Zusammenfalten und Verkleben - wie im folgenden beschrieben wird - zwischen der Rückseite 6 und der Vorderseite 4 angeordnet sein, wobei gleichzeitig die Vorderseite 4 parallel zur Rückseite 6 ausgerichtet ist.

Im wesentlichen in der Mitte der Rückseite 6 ist ein Befestigungselement 8 befestigt, vorzugsweise verklebt. Auch das Befestigungselement 8 besteht aus einem Pappmaterial, vorzugsweise aus demselben Pappmaterial wie der Zuschnitt 10. Das Befestigungselement 8 weist einen äußeren Durchmesser auf, der an den inneren Durchmesser der im Zentrum einer Compact Disk angeordneten Öffnung angepaßt ist, wie bereits zuvor beschrieben worden ist.

Der Befestigungsrahmen 12 weist eine kreisförmige Öffnung 18 auf, deren Innendurchmesser an den Außendurchmesser einer Compact Disk angepaßt ist. Dabei ist es wichtig, daß die Öffnung 18 des Befestigungsrahmens 12 derart angeordnet ist, daß im zusammengebauten Zustand die Öffnung 18 und das Befestigungselement 8 aufeinander zentriert angeordnet sind, so daß sowohl das zentriert angeordnete Loch der Compact Disk auf das Befestigungselement 8 als auch die Öffnung 18 auf den Umfang der Compact Disk paßt.

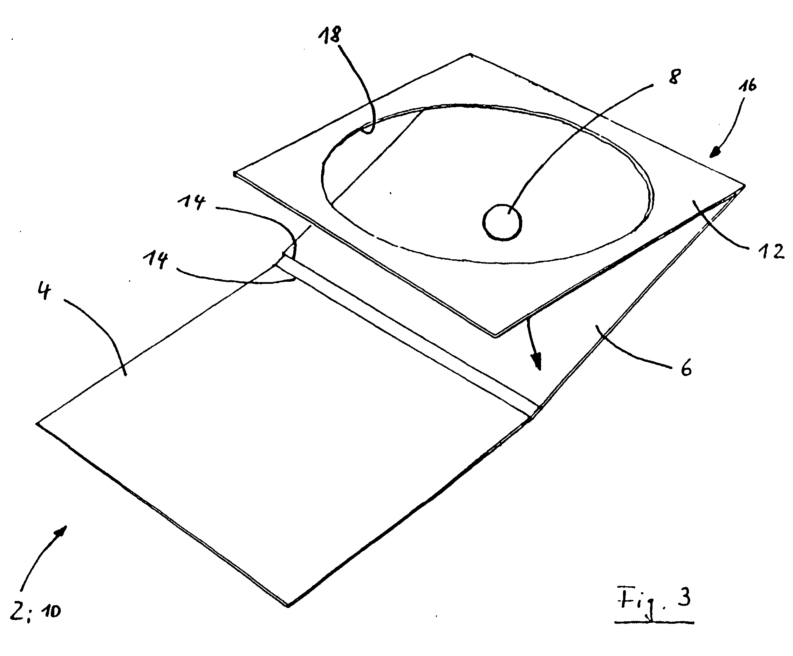

In Fig. 3 ist in perspektivischer Darstellung das Zusammenfalten des Zuschnittes 10 zu einer Halterung für eine Compact Disk dargestellt. Entlang der Falzungen 14 und 16 wird der Zuschnitt 10 so zusammengefaltet, daß der Befestigungsrahmen 12 auf der Innenfläche der Rückseite 6 anliegt und mit dieser verklebt wird. Somit bilden der Befestigungsrahmen 12 und die Rückseite 6 eine feste, stabile Einheit. Die Vorderseite 4 der Umhüllung 2 kann dann auf den Befestigungsrahmen 12 gefaltet werden, wobei nicht dargestellte Verschlußmittel wie Klebestreifen, Laschen oder Druckknöpfe vorgesehen sein können. Eine Compact Disk kann dann in die Öffnung 18 des Befestigungsrahmen 12 und auf das Befestigungselement 8 aufgesetzt und heruntergedrückt werden. Dadurch ergibt sich ein fester Sitz der Compact Disk innerhalb der Halterung, wobei dieser feste Sitz durch Verbiegen des aus Pappe bestehenden Befestigungsrahmens 12 zusammen mit der Rückseite 6 gelöst werden kann.

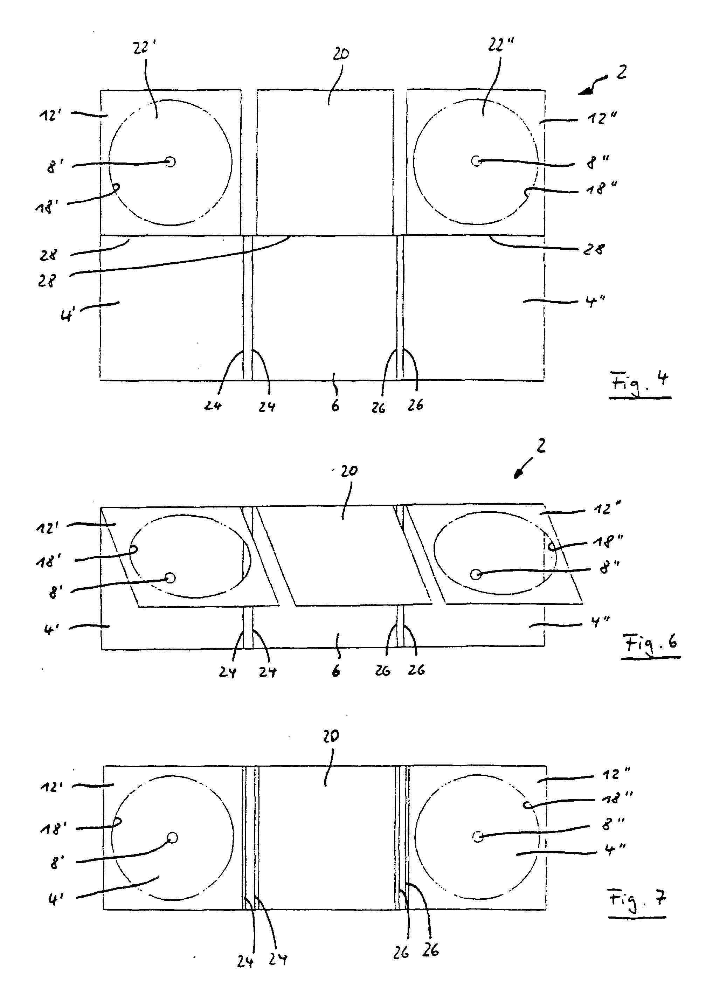

In den Fign. 4 bis 7 ist die Herstellung einer Halterung für zwei Compact Disks dargestellt.

Fig. 4 zeigt den entsprechenden Zuschnitt einer Umhüllung 2 mit zwei Vorderseiten 4' und 4'' sowie einer Rückseite 6. Damit verbunden sind Befestigungsrahmen 12' und 12'' sowie ein Verstärkungselement 20. Innerhalb der Befestigungsrahmen 12' und 12'' sind Scheiben 22' und 22'' sowie Befestigungselemente 8' und 8'' angeordnet. Die Scheiben 22' und 22'' entsprechen in ihren Abmessungen einer Compact Disk. Die Stanzungen der Umrandungen der Scheiben 22' und 22'' sowie der Befestigungselemente 8' und 8'' sind dabei im wesentlichen vollständig, jedoch werden diese herausdrückbar innerhalb der Befestigungsrahmen 12' und 12'' gehalten. Weiterhin sind Falzungen 24, 26 und 28 im Zuschnitt eingebracht, so daß ein Zusammenfalten des Zuschnittes zu einer Halterung an vorgegebenen Linien ermöglicht wird.

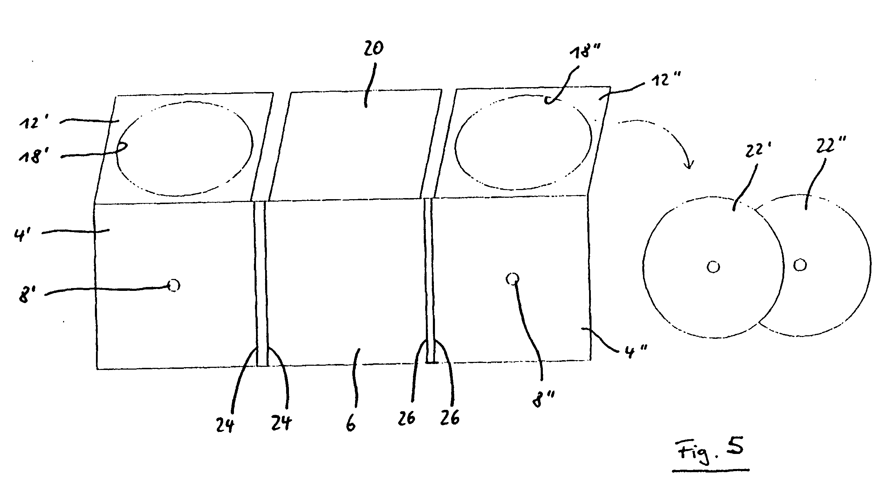

Zu Beginn des Herstellungsverfahrens werden die Befestigungsrahmen 12' und 12'' herumgeklappt und in Anlage mit den Vorderseiten 4' und 4'' gebracht. Derart angedrückt werden die Befestigungselemente 8' und 8'' durch Kleben mit den Vorderseiten 4' und 4'' verbunden. Durch Herausdrücken aus den Scheiben 22' und 22'' werden die Befestigungselemente 8' und 8'' von diesen getrennt. Anschließend werden die Befestigungsrahmen 12' und 12'' mit den Scheiben 22' und 22" wieder hochgeklappt und die Scheiben 22' und 22'' werden aus den Befestigungsrahmen 12' und 12'' herausgelöst. Dieses ist in Fig. 5 dargestellt.

Fig. 6 zeigt das erneute Umklappen der Befestigungsrahmen 12' und 12'' sowie des Verstärkungselementes 20, um diese in Anlage mit den Vorderseiten 4' und 4'' sowie der Rückseite 6 zu bringen. Anschließend werden diese durch Kleben miteinander verbunden, so daß die in Fig. 7 dargestellte fertige Halterung für zwei Compact Disks entsteht. Diese muß dann lediglich noch entlang der Falzungen 24 und 26 umgeklappt werden.

Die Ausgestaltung des in Fig. 4 dargestellten Zuschnittes mit Scheiben 22' und 22" ermöglicht es in einfacher Weise, die Befestigungselemente 8' und 8'' an einer zentrierten Position mit den Vorderseiten 4' und 4'' zu verbinden. Diese sind nachdem Befestigen der Befestigungsrahmen 12' und 12'' exakt auf die Öffnungen 18' und 18'' zentriert ausgerichtet, so daß jeweils eine Compact Disk gleichzeitig auf die Befestigungselemente 8' und 8'' sowie in die Befestigungsrahmen 12' und 12'' passen.

Die herausgelösten Scheiben 22' und 22'' können bedruckt sein, so daß diese in vorteilhafter Weise zusätzlich als Werbematerial verwendet werden können.

### Bezugszeichenliste

- 2: Umhüllung
- 4: Vorderseite
- 6: Rückseite
- 8: Befestigungselemente
- 10: Zuschnitt
- 12: Befestigungsrahmen
- 14: Falzung
- 16: Falzung
- 18: Öffnung
- 20: Verstärkungselement
- 22: Scheibe
- 24: Falzung
- 26: Falzung
- 28: Falzung

## Patentansprüche

1. Halterung für mindestens eine Compact Disk
- mit einer mindestens eine Vorderseite (4) und eine Rückseite (6) aufweisenden Umhüllung (2) aus einem Pappmaterial und
- mit mindestens einem auf einer der Innenflächen der Umhüllung (2) angeordneten Befestigungselement (8),
**dadurch gekennzeichnet,**
- **daß** das Befestigungselement (8) aus einem Pappmaterial besteht und
- **daß** das Befestigungselement (8) im wesentlichen rund ausgebildet ist und der Außendurchmesser des Befestigungselementes (8) an den Innendurchmesser der zentral angeordneten Öffnung der Compact Disk angepaßt ist.

2. Halterung nach Anspruch 1, **dadurch gekennzeichnet, daß** auf der Innenfläche der Umhüllung (2) mindestens ein aus einem Pappmaterial hergestellter Befestigungsrahmen (12) angeordnet ist, der eine im wesentlichen kreisförmige Öffnung (18) aufweist, wobei der Innendurchmesser der Öffnung (18) an den Außendurchmesser der Compact Disk angepaßt ist und wobei die Öffnung (18) auf das Befestigungselement (8) zentriert angeordnet ist.

3. Halterung nach Anspruch 1 oder 2, **dadurch gekennzeichnet, daß** an der Innenseite der Öffnung (18) des Befestigungsrahmens (12) mindestens eine radial nach außen gerichtete Ausnehmung vorgesehen ist.

4. Halterung nach einem der Ansprüche 1 bis 3, **dadurch gekennzeichnet, daß** auf der Innenfläche der Vorderseite (4; 4') und auf der Innenfläche der Rückseite (6) oder einer weiteren Vorderseite (4 ") Befestigungselemente (8; 8', 8 ") und/oder Befestigungsrahmen (12; 12', 12 ") angeordnet sind.

## Claims

1. A mounting for at least one compact disc
- having a sleeve (2) made from a carton material and having at least one front side (4) and a rear side (6), and
- having at least one securing element (8) arranged on one of the inner faces of the sleeve (2),
**characterised**
- **in that** the securing element (8) is made of a carton material, and
- **in that** the securing element (8) is of substantially round construction and the external diameter of the securing element (8) is adapted to the internal diameter of the centrally arranged opening in the compact disc.

2. A mounting according to Claim 1, **characterised in that** a least one securing frame (12) made from a carton material is arranged or the inner face of the sleeve (2) and has a substantially circular opening (18), the internal diameter of the opening (18) being adapted to the external diameter of the compact disc and the opening (18) being centrally arranged on the securing element (8).

3. A mounting according to Claim 1 or 2, **characterised in that** at least one radially outwardly directed cutout is provided on the inside of the opening (18) in the securing frame (12).

4. A mounting according to one of Claims 1 to 3, **characterised in that** securing elements (8; 8', 8") and/or securing frames (12; 12', 12") are arranged on the inner face of the front side (4; 4') and on the inter face of the rear side (6) or a further front side (4").

## Revendications

1. Dispositif de retenue pour au moins un disque compact, comportant:
- une enveloppe (2) en carton, qui comporte au moins une face avant (4) et une face arrière (6), et
- au moins un élément de fixation (8) disposé sur l'une des surfaces intérieures de l'enveloppe (2),
**caractérisé en ce**
- **que** l'élément de fixation (8) est constitué par du carton, et
- **que** l'élément de fixation (8) est agencé de manière à être essentiellement circulaire et que le diamètre extérieur de l'élément de fixation (8) est adapté au diamètre intérieur de l'ouverture, disposée de façon centrale, du disque compact.

2. Dispositif de retenue selon la revendication 1, **caractérisé en ce que** sur la surface intérieure de l'enveloppe (2) est disposé au moins un cadre de fixation (12), qui est réalisé en carton et possède une ouverture (18) de forme essentiellement circulaire, le 'diamètre intérieur de l'ouverture (18) étant adapté au diamètre extérieur du disque compact, et l'ouverture (18) étant disposée d'une manière centrée sur l'élément de fixation (8).

3. Dispositif de retenue selon la revendication 1 ou 2, **caractérisé en ce qu'**au moins un évidement dirigé radialement vers l'extérieur est prévu dans la face intérieure de l'ouverture (18) du cadre de fixation (12).

4. Dispositif de retenue selon l'une des revendications 1 à 3, **caractérisé en ce que** des éléments de fixation (8; 8', 8") et/ou des cadres de fixation (12; 12', 12") sont disposés sur la surface intérieure du côté avant (4 ; 4') et sur la surface intérieure du côté arrière (6) ou d'un autre côté avant (4").
